Europäisches Patentamt

European Patent Office

Office européen des brevets

(19)

(11) Veröffentlichungsnummer : **0 290 524 B1**

## (12) EUROPÄISCHE PATENTSCHRIFT

(45) Veröffentlichungstag der Patentschrift :
**15.01.92 Patentblatt 92/03**

(51) Int. Cl.⁵ : **G05B 13/02, G11B 7/09**

(21) Anmeldenummer : **87907425.0**

(22) Anmeldetag : **12.11.87**

(86) Internationale Anmeldenummer :
**PCT/EP87/00697**

(87) Internationale Veröffentlichungsnummer :
**WO 88/03671 19.05.88 Gazette 88/11**

(54) **SCHALTUNGSANORDNUNG ZUR AUTOMATISCHEN EINSTELLUNG DER REGELVERSTÄRKUNG IN EINEM REGELKREIS.**

(30) Priorität : **13.11.86 DE 3638831**

(43) Veröffentlichungstag der Anmeldung :
**17.11.88 Patentblatt 88/46**

(45) Bekanntmachung des Hinweises auf die
Patenterteilung :
**15.01.92 Patentblatt 92/03**

(84) Benannte Vertragsstaaten :
**AT BE CH DE FR GB IT LI LU NL SE**

(56) Entgegenhaltungen :
**US-A- 3 727 035**
**US-A- 4 096 425**
**US-A- 4 466 087**

(73) Patentinhaber : **Deutsche Thomson-Brandt GmbH**
**Hermann-Schwer-Strasse 3 Postfach 1307**
**W-7730 Villingen-Schwenningen (DE)**

(72) Erfinder : **BAAS, Dieter**
**Sofienstrasse 10**
**W-7640 Kehl (DE)**

EP 0 290 524 B1

## Beschreibung

Die Erfindung betrifft einen Spur- oder Fokusregelkreis für ein optisches Aufzeichnungs- und/oder Wiedergabegerät.

Regelkreise werden z.B. in CD-Plattenspielern eingesetzt, um die optische Abtastvorrichtung auf der Datenspur der CD-Platte zu führen und um den abtastenden Lichtstrahl auf die Plattenoberfläche zu fokussieren. Diese Servoregelkreise, der Spurregelkreis und der Fokusregelkreis, müssen präzise arbeiten und genau eingestellt sein, damit eine einwandfreie Tonwiedergabe erzielt wird.

Die Einstellung der Verstärkung bei den Reglern erfolgt in der Regel von Hand durch Verstellen eines Potentiometers. Diese Einstellarbeiten sind relativ aufwendig und nehmen viel Zeit in Anspruch. Weil zudem die in den Regelkreisen und der optischen Abtastvorrichtung enthaltenen elektronischen Bauelemente im Laufe der Zeit altern, muß häufig die Verstärkung bei den Reglern von Hand nachgestellt werden. Die Einstellung von Hand sowohl bei der Produktion als auch bei der Wartung ist natürlich von Nachteil, weil sie Zeit und damit auch Geld kostet.

Aus der US-PS 4 096 425 ist ein Verfahren zur automatischen Einstellung der Regelverstärkung in einem Regelkreis beschrieben, das vorsieht, in den Regelkreis einen Meßimpuls einzuspeisen. Aus einem Vergleich des eingespeisten Meßimpulses mit der von ihm bewirkten Impulsantwort wird die Regelverstärkung abgeleitet.

In der US-PS 3 727 035 wird erläutert, warum z.B. in einem Regelkreis, an dessen Regelprozeß ein Katalysator beteiligt ist, die Parameter für die Systemgleichung von Zeit zu Zeit neu berechnet werden müssen, weil die Wirkung des Katalysators im Laufe der Zeit nachläßt. Die jeweils aktuellen Parameter für die Systemgleichung werden aus der Impulsantwort eines Testimpulspaares unterschiedlicher Polarität berechnet, das dem Regelkreis aufgeprägt wird.

Wegen des Plattenschlags wird aber die Einstellung der Verstärkung im Spur- und im Fokusregelkreis eines optischen Aufzeichnungs- und/oder Wiedergabegerätes erschwert.

Es ist daher Aufgabe der Erfindung, die automatische Einstellung der Regelverstärkung im Spur- oder im Fokusregelkreis eines optisches Aufzeichnungs- und/oder Wiedergabegerätes zu verbessern.

Die Erfindung löst diese Aufgabe durch die im Anspruch 1 angeführten Merkmale.

Es zeigen

Figur 1 ein Ausführungsbeispiel des erfindungsgemäßen Regelkreises

Figur 2 den Verlauf der Regelgröße in Abhängigkeit von einem Meßimpuls.

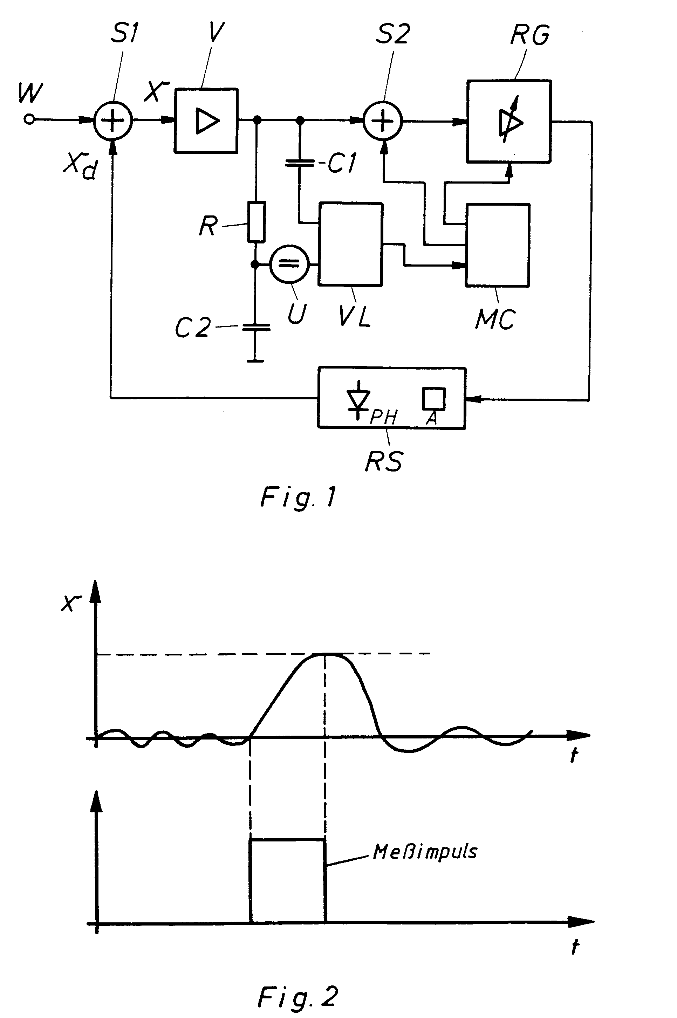

Anhand des in Figur 1 abgebildeten Ausführungsbeispieles und des in Figur 2 gezeigten Diagrammes wird die Erfindung nun erläutert.

In der Figur 1 wird die Führungsgröße W dem ersten Eingang einer Summationsstelle S1 zugeführt, deren zweiter Eingang mit dem Ausgang der Regelstrecke RS verbunden ist. Die Regelstrecke RS enthält ein Stellglied, einen sogenannten Aktuator, und einen als Meßfühler dienenden Photodetektor PH zur Aufnahme des Istwertes. Der Ausgang der Summationsstelle S1 ist mit dem Eingang eines Vorverstärkers V verbunden, dessen Ausgang unmittelbar mit dem ersten Eingang einer Summationsstelle S2 und über ein Filter, z.B. eine als Hochpaß vorgesehene Kapazität C1, mit dem ersten Eingang eines Vergleichers VL verbunden ist. Der zweite Eingang des Vergleichers VL liegt am einen Pol einer Referenzspannungsquelle U, deren anderer Pol über einen Widerstand R mit dem ersten Eingang der Summationsstelle S2 verbunden ist und über eine Kapazität C2 auf Bezugspotential liegt. Der Ausgang der Summationsstelle S2 ist mit dem Eingang des Reglers RG verbunden, der mit einem Regelverstärker ausgestattet ist und dessen Ausgang mit dem Eingang der Regelstrecke RS verbunden ist. Der Ausgang des Vergleichers VL, der z.B. als Analog-Digital-Wandler ausgeführt sein kann, ist mit dem Eingang eines Mikrocomputers MC verbunden, dessen erster Ausgang mit dem zweiten Eingang der Summationsstelle S2 und dessen zweiter Ausgang mit dem Eingang zur Einstellung der Regelverstärkung am Regler RG verbunden ist.

Der Wiederstand R und die Kapazität C2 bilden einen Tiefpaß, der niederfrequente Änderungen der Regelgröße X, wie sie hauptsächlich durch Plattenschlag verursacht werden, an den zweiten Eingang des Vergleichers VL getangen läßt. Weil dadurch die Referenzgröße am zweiten Eingang des Vergleichers VL stets den niederfrequenten Änderungen der Regelgröße X nachgeführt wird, kann die Regelverstärkung genauer eingestellt werden.

Zu Beginn des automatischen Einstellvorgangs der Regelverstärkung kann die Regelverstärkung zunächst auf einen mittleren Wert eingestellt werden. Anschließend gibt der Mikrocomputer MC so lange einen Meßimpuls an den Eingang des Reglers RG ab, bis der Vergleicher VL durch ein Signal dem Mikrocomputer MC anzeigt, daß die Regelgröße X den vorgegebenen Sollwert angenommen hat. Der zeitliche Verlauf der Regelgröße X am Ausgang des Vorverstärkers V in Abhängigkeit vom Meßimpuls ist in Figur 2 gezeigt.

Weil der vorgegebene Sollwert für die Regelgröße X zur Regelverstärkung proportional ist, besteht zwischen der Dauer des Meßimpulses und der Regelverstärkung ein proportionaler Zusammenhang. Der Mikrocomputer MC erkennt an der Dauer des Meßimpulses, wie groß die Regelverstärkung tatsächlich ist, und kann sie deshalb auf den korrekten Wert einstellen, falls sie nicht zufällig bereits auf den richtigen Wert eingestellt ist.

Dieses Verfahren kann z.B. mehrmals wiederholt werden, um mehrere Werte für die Einstellung der Regelverstärkung zu gewinnen, aus denen ein Mittelwert gebildet und als endgültiger Wert angesehen wird. Bei der Bildung des Mittelwertes können solche Werte, die außerhalb eines vorgebbaren Bereichs liegen, unberücksichtigt bleiben.

Besonders vorteilhaft ist es, nach dem ersten Meßimpuls einen Impuls entgegengesetzter Polarität vorzusehen, weil dadurch das Einschwingen des Regelkreises unter starker Dämpfung der überschwinger wesentlich schneller erfolgt. Dieses Verfahren kann mehrmals wiederholt werden, um einen Mittelwert bilden zu können.

Der Mikrocomputer MC kann beispielsweise nacheinander so lange mehrere Meßimpulse konstanter Amplitude und konstanter Dauer an den Regler RG abgeben und gleichzeitig die Regelverstärkung von Meßimpuls zu Meßimpuls schrittweise so lange erhöhen, bis der Vergleicher VL durch ein Signal dem Mikrocomputer MC anzeigt, daß die Regelgröße X den vorgegebenen Sollwert angenommen hat.

Auch dieses Verfahren kann mehrmals wiederholt werden. Aus den durch die Wiederholungen gewonnenen Werten für die Regelverstärkung wird ein Mittelwert gebildet, auf den die Regelverstärkung schließlich eingestellt wird. Werte, die außerhalb eines vorgebbaren Bereiches liegen, können bei der Bildung des Mittelwertes unberücksichtigt bleiben.

Es ist auch möglich, zunächst einen ersten Meßimpuls so lange dem Regelkreis aufzuprägen, bis die Regelgröße X einen ersten vorgebbaren Sottwert annimmt. Anschließend wird ein zweiter Meßimpuls entgegengesetzter Polarität so lange dem Regelkreis aufgeprägt, bis die Regelgröße X einen zweiten vorgebbaren Sollwert annimmt. Aus der Dauer des ersten und zweiten Meßimpulses wird das Kriterium für die Einstellung der Regelverstärkurg abgeleitet, indem dieses Verfahren ebenfalls mehrmals wiederholt wird, um einen Mittelwert zu bilden.

Eine weitere Ausgestaltung, der Erfindung sieht vor, dem Regelkreis so lange Meßimpulse konstanter Amplitude und konstanter Dauer aber entgegengesetzter Polarität aufzuprägen und währenddessen so lange die Regelverstärkung schrittweise von Meßimpuls zu Meßimpuls zu verändern, bis die Regelgröße X einen vorgebbaren ersten Sollwert und einen vorgebbaren zweiten Sollwert annimmt. Auch dieses Verfahren kann mehrmals wiederholt werden, um einen Mittelwert zu bilden.

Die Meßimpulse können z.B. jedesmal beim Einschalten des CD-Spielers vom Mikrocomputer MC abgegeben werden, um die Regelverstärkung einzustellen. Auch während der Pausen zwischen zwei auf einer CD-Platte gespeicherten Musikstücken und sogar während der Musikwiedergabe läßt sich die Regelverstärkung einstellen, ohne daß die Wiedergabe des Gerätes dadurch hörbar beeinträchtigt wird. Daher entfallen nicht nur die lästigen und zeitaufwendigen Einstellarbeiten von Hand bei der Produktion; es werden auch spätere manuell auszuführende Neueinstellungen überflüssig, weil die Alterung der Bauteile, die im Regelkreis enthalten sind, und die Drift ihrer Parameter infolge Temperaturschwankungen keine Rolle mehr spielen. Zudem ist die Einstellung genauer als beim eingangs erwähnten Stand der Technik.

## Patentansprüche

1. Spur- oder Fokusregelkreis für ein optisches Aufzeichnungs- und/oder Wiedergabegerät, wobei dem ersten Eingang einer ersten Summationsstelle (S1) die Führungsgröße W zugeführt wird, wobei der zweite Eingang der ersten Summationsstelle (S1) mit dem Ausgang der Regelstrecke (RS) verbunden ist, deren Eingang mit dem Ausgang eines Reglers (RG) verbunden ist, wobei der Ausgang der ersten Summationsstelle (S1) mit dem ersten Eingang eines Vergleichers (VL) und mit dem ersten Eingang einer zweiten Summationsstelle (S2) verbunden ist, wobei der Ausgang der zweiten Summationsstelle (S2) mit dem Eingang des Reglers (RG) verbunden ist, wobei der Ausgang des Vergleichers (VL) mit dem Eingang eines Mikrocomputers (MC) verbunden ist, wobei der erste Ausgang des Mikrocomputers (MC) mit dem zweiten Eingang der zweiten Summationsstelle (S2) verbunden ist und wobei der zweite Ausgang des Mikrocomputers (MC) mit dem Eingang zur Einstellung der Regelverstärkung am Regler (RG) verbunden ist, **dadurch gekennzeichnet**, daß der zweite Eingang des Vergleichers (VL) mit dem einen Pol einer Referenzspannungsquelle (U) verbunden ist, deren anderer Pol über einen Widerstand (R) mit dem ersten Eingang der zweiten Summationsstelle (S2) verbunden ist und über eine Kapazität (C2) auf Bezugspotential liegt.

2. Schaltungsanordnung nach Anspruch 1, **dadurch gekennzeichnet**, daß der erste Eingang des Vergleichers (VL) über ein Filter (C1) mit dem ersten Eingang der zweiten Summationsstelle (S2) verbunden ist.

3. Schaltungsanordnung nach Anspruch 1 oder 2, **dadurch gekennzeichnet**, daß auf den Ausgang der ersten Summationsstelle (S1) ein Vorverstärker (V) folgt.

## Claims

1. A track or focus control circuit for an optical recording or reproducing device or both, in which the control input W is supplied to the first input of a first summation point (S1), the second input of the first summation point (S1) is connected to the output of the controlled member (RS) of which the input is connected to the output of a controller (RG), and the output of the first summation point (S1) is connected to the first input of a comparator (VL) and to the first input of a second summation point (S2), and the output of the second summation point (S2) is connected to the input of the controller (RG), and the output of the comparator (VL) is connected to the input of a microcomputer (MC) and the first output of the microcomputer (MC) is connected to the second input of the second summation point (S2) and the second output of the microcomputer (MC) is connected to the input for adjusting the loop gain in the controller (RG) characterised in that the second input of the comparator (VL) is connected to one pole of a reference voltage source (U), of which the other pole is connected by a resistance (R) to the first input of the second summation point (S2) and is connected to reference potential by way of a capacitance (C2).

2. A circuit according to Claim 1, characterised in that the first input of the comparator (VL) is connected by way of a filter (C1) to the second input of the second summation point (S2).

3. A circuit arrangement according to Claim 1, characterised in that a pre-amplifier (V) follows the output of the first summation point (S1).

## Revendications

1. Circuit de réglage de pistes ou de foyer pour appareil d'enregistrement et/ou de reproduction optique. la grandeur de référence W étant amenée à la première entrée d'un premier addeur (S1), la seconde entrée du premier addeur (S1) étant reliée à la sortie du système asservi (RS) dont l'entrée est reliée à la sortie d'un régulateur (RG), la sortie du premier addeur (S1) étant reliée à la première entrée d'un comparateur (VL) et à la première entrée d'un second addeur (S2), la sortie du second addeur (S2) étant reliée à l'entrée du régulateur (RG), la sortie du comparateur (VL) étant reliée à l'entrée d'un micro-ordinateur (MC), la première entrée du micro-ordinateur (MC) étant reliée à la seconde entrée du second addeur (S2) et la seconde sortie du micro-ordinateur (MC) étant reliée à l'entrée pour le réglage de l'amplification de réglage sur le régulateur (RG), **caractérisé en ce** que la seconde entrée du comparateur (VL) est reliée à l'un des pôles d'une source de tension de référence (U) dont l'autre pôle est relié par une résistance (R) à la première entrée du second addeur (S2) et est mis sur le potentiel de référence par un condensateur (C2).

2. Dispositif de commutation selon la revendication 1, **caractérisé en ce** que la première entrée du comparateur (VL) est reliée par un filtre (C1) à la première entrée du second addeur (S2).

3. Dispositif de commutation selon la revendication 1 ou 2, **caractérisé en ce** qu'un préamplificateur (V) suit la sortie du premier addeur (S1).

Fig. 1

Meßimpuls

Fig. 2